# EUROPEAN PATENT APPLICATION

(11) **EP 3 101 299 A1**
(43) Date of publication of application: **07.12.2016**
(21) Application number: 15739769.6
(22) Date of filing: 22.01.2015
(51) Int. Cl.: F16D 41/06

(54) **DIVIDED HOLDING DEVICE AND JOINT FOR POWER-GENERATING APPARATUS**

(30) Priority: 23.01.2014 JP 2014010278
(71) Applicant: JTEKT Corporation, Osaka-shi, Osaka 542-8502 (JP)
(72) Inventor: FUJIWARA, Hideki, Osaka-shi Osaka 542-8502 (JP)
(74) Representative: Winter, Brandl, Fürniss, Hübner, Röss, Kaiser, Polte - Partnerschaft mbB
(86) International application number: PCT/JP2015/051592
(87) International publication number: WO 2015/111639

(57) **Abstract**

In a divided cage, a plurality of pockets for accommodating engaging elements between an inner ring and an outer ring of a one-way clutch are formed in a circumferential direction. The divided cage includes: a pair of ring-shaped portions which oppose each other in an axial direction and which are provided between the inner ring and the outer ring; and a plurality of pillar portions which are separated members from the pair of ring-shaped portions and which have end portions in the axial direction connected to the ring-shaped portions. Side faces of both the ring-shaped portions opposing each other in the axial direction are subjected to abrasion resistance treatment.

## Description

### Technical Field

An aspect of the present invention relates to a divided cage for use in a one-way clutch and to a joint member for a wind power generation apparatus equipped with the divided cage.

### Background Art

As a wind power generation apparatus, an apparatus is known in which a blade receives wind power, a main spindle connected to the blade is rotated, and the rotation of the main spindle is increased by a speed increaser to drive a generator. This kind of wind power generation apparatus has a problem that power generation efficiency lowers because the rotation speed transmitted from the blade to the generator via the main spindle, speed increaser, etc. is changed by the change in wind speed and wind direction.

Hence, the applicants of this application have already proposed a wind power generation apparatus in which a one-way clutch is disposed between the speed increaser and the generator to improve power generation efficiency (refer to Patent Document 1). In this wind power generation apparatus, even if the rotation of the main spindle is lowered by the change in wind speed for example, the rotation speed of the input shaft of the generator is not lowered abruptly but the input shaft can be rotated continuously by inertia by cutting off the connection between the output shaft of the speed increaser and the input shaft of the generator using the one-way clutch, whereby the average rotation speed of the input shaft can be increased and power generation efficiency can be improved.

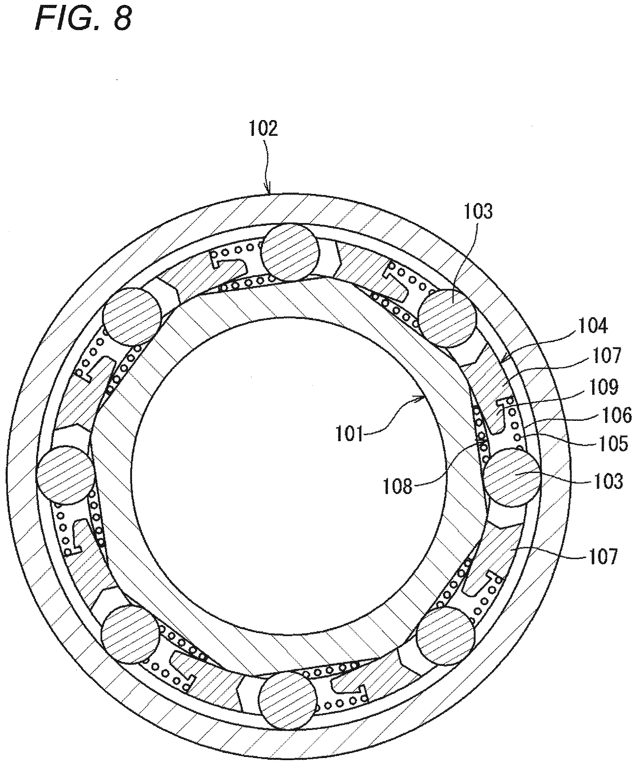

As shown in FIG. 8, the above-mentioned one-way clutch is equipped with an inner ring 101, an outer ring 102, a plurality of rollers (engaging elements) 103, a ring-shaped cage 104 for holding the plurality of rollers 103 at intervals in the circumferential direction, and springs 105 that elastically urge the rollers 103 toward one side in the circumferential direction. In the cage 104, a pair of ring-shaped portions 106 opposing each other in the axial direction and a plurality of pillar portions 107 for connecting both the ring-shaped portions 106 are formed integrally, and a pocket 108 for accommodating one roller 103 and one spring 105 is formed between both the ring-shaped portions 106 and between the pillar portions 107 adjacent to each other in the circumferential direction. In addition, the pillar portion 107 is provided with a protruding portion 109 protruding in the circumferential direction to support the spring 105 inside the pocket 108.

However, since the pocket 108 is formed in the space enclosed with the ring-shaped portions 106 and the pillar portions 107, and since the pillar portion 107 has the protruding portion 109 and is formed into a complicated shape, in the case that this kind of cage 104 is manufactured by using a machining method, the method is not desirable because the cost of the manufacturing increases. Furthermore, it is conceivable that a method in which a synthetic resin material is injection molded so that the cage 104 having the above-mentioned configuration is formed integrally; however, the cage 104 for use in a power generation apparatus is large in size, and it is difficult to form this kind of large cage 104 by injection molding.

Hence, the applicants of this application have already proposed a divided cage so that the cage for the one-way clutch described above can be manufactured easily (refer to Patent Document 2). In other words, as shown in FIG. 9, a divided cage 90 has a pair of ring-shaped portions 91 opposing each other in the axial direction and a plurality of pillar portions 92 which are separated members from the ring-shaped portions 91, and the cage 90 is structured so as to be assembled by fitting both the end portions of the pillar portions 92 in the axial direction into both the ring-shaped portions 91.

### Related Art Documents

### Patent Documents

Patent Document 1: JP-A-2013-060825
Patent Document 2: JP-A-2013-231448

### Summary of the Invention

### Problem to be Solved by the Invention

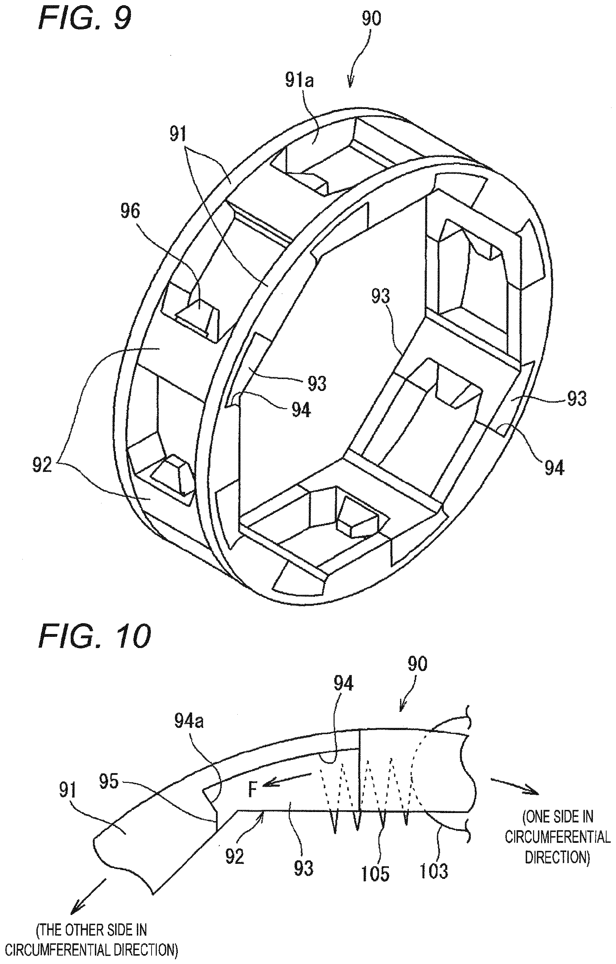

With the divided cage 90 shown in FIG. 9, since the ring-shaped portions 91 are separated members from the pillar portions 92, they can be manufactured individually, and the cage 90 can be manufactured easily. In particular, in the case that the cage is large in size so as to be used for a one-way clutch for use in a power generation apparatus, the cage 90 can be manufactured easily by making the cage into a divided type.

With respect to the divided cage described above, a new problem has been found while studies have been made further earnestly by the applicants. More specifically, it is conceived that the roller 103 of the one-way clutch may slide with respect to the side faces 91a (see FIG. 9) of the ring-shaped portion 91 opposing the end faces of the roller 103 due to skew or the like, and this sliding may cause abrasion on the side faces 91 a and may result in breakage of the cage 90, thereby being found as a new problem.

Accordingly, an aspect of the present invention is intended to provide a divided cage capable of solving the above-mentioned problem and to provide a joint member for a power generation apparatus equipped with a one-way clutch having this divided cage.

### Means for Solving the Problem

(1) A first aspect of the present invention provides a divided cage in which a plurality of pockets for accommodating engaging elements between an inner ring and an outer ring of a one-way clutch are formed in a circumferential direction, the divided cage including: a pair of ring-shaped portions which oppose each other in an axial direction and which are provided between the inner ring and the outer ring; and a plurality of pillar portions which are separated members from the pair of ring-shaped portions and which include end portions in the axial direction connected to the ring-shaped portions, wherein side faces of both the ring-shaped portions opposing each other in the axial direction are subjected to abrasion resistance treatment.
   With this configuration, the engaging elements slide on the side faces of both the ring-shaped portions of the divided cage opposing each other in the axial direction. However, since the side faces are subjected to the abrasion resistance treatment, the abrasion on the side faces can be suppressed.
(2) The ring-shaped portions may be made of metal, and the abrasion resistance treatment may be soft nitriding treatment.
   With this soft nitriding treatment, not only the hardness of the side faces of both the ring-shaped portions opposing each other in the axial direction can be made higher, but also the friction coefficient of the side faces can be made smaller. Hence, the engaging elements slide on the side faces easily, whereby the power transmission loss of the one-way clutch can be reduced.
   Furthermore, in the case that the engaging elements are allowed to slide easily on the side faces of both the ring-shaped portions opposing each other in the axial direction as described above, the abrasion of the side faces can be suppressed further. Moreover, since the soft nitriding treatment is performed at a treatment temperature of not higher than the A₁ transformation point, the dimensional change and distortion of the ring-shaped portions due to the soft nitriding treatment are small. Hence, the ring-shaped portions can be connected to the pillar portions easily and the divided cage can be assembled easily without performing secondary processing for the ring-shaped portions after the soft nitriding treatment.
   In the soft nitriding treatment, the hardness of the portions near the surface subjected to the treatment can be made higher, but the depth (hardness depth) in which hardening can be performed is shallow. However, unlike the cases of the inner ring and the outer ring of the one-way clutch, a large shearing force and a large contact surface pressure are not exerted to the side faces of both the ring-shaped portions opposing each other in the axial direction, whereby no problem occurs even if the side faces are subjected to the soft nitriding treatment.
(3) A spring provided in each of the pockets may urge the engaging element toward one side in the circumferential direction, whereby reaction force toward the other side in the circumferential direction is exerted to the pillar portion, a plurality of recess portions may be formed at intervals in the circumferential direction on an inner peripheral side of each of the ring-shaped portions, each of the recess portions may have a wedge face which forms a wedge-shaped space that becomes radially narrower toward the other side in the circumferential direction between the wedge face and an outer peripheral face of the inner ring, the pillar portion may have pillar end portions on both sides thereof in the axial direction so as to be fitted in the recess portions, and the pillar end portion may have a wedge shape in which a radial dimension thereof toward the other side in the circumferential direction becomes smaller, and include a radial outside face which contacts the wedge face, and a radial inside face which contacts the outer peripheral face of the inner ring.
   With this configuration, the pillar end portion having a wedge shape in which the radial dimension thereof toward the other side in the circumferential direction becomes smaller is fitted in the wedge-shaped space that is formed between the wedge face of the recess portion of the ring-shaped portion and the outer peripheral face of the inner ring and becomes narrower radially toward the other side in the circumferential direction. Furthermore, the radial outside face of the pillar end portion contacts the wedge face of the recess portion, and the radial inside face of the pillar end portion contacts the outer peripheral face of the inner ring. Hence, when the spring urges the engaging element toward one side in the circumferential direction, the reaction force (the reaction force toward the other side in the circumferential direction) of the spring is exerted to the pillar portion; since the wedge-shaped pillar end portion is fitted into the wedge-shaped space, the reaction force is transmitted from the radial outside face and the radial inside face of the pillar end portion to the ring-shaped portions and the inner ring, respectively. Moreover, the shape of the pillar end portion is simplified, and the shape of the recess portion of the ring-shaped portion in which the pillar end portion is fitted is also simplified, whereby the divided cage composed of components having simplified configurations is obtained.
(4) A second aspect of the present invention provides a joint member for a power generation apparatus, the power generation apparatus including: a main spindle that is rotated by an external force; a speed increaser including a rotation transmission mechanism which increases rotation of the main spindle, and an output shaft which outputs the rotation increased by the rotation transmission mechanism; and a generator which includes an input shaft that is rotated when the rotation of the output shaft is input and which generates electric power by the rotation of a rotor that rotates integrally with the input shaft, the joint member including: a first rotor integrally rotating with the output shaft of the speed increaser; a second rotor integrally rotating with the input shaft of the generator; and a one-way clutch disposed between the first rotor and the second rotor, wherein the one-way clutch includes: an inner ring; an outer ring concentric with the inner ring; a plurality of engaging elements provided between the inner ring and the outer ring; the divided cage to be used for the engaging elements and described in any one of the above-mentioned items (1) to (3); and springs provided in the pockets of the divided cage to urge the engaging elements toward one side in the circumferential direction.

With this configuration, the joint member is equipped with the divided cage described in any one of the above-mentioned items (1) to (3), whereby the abrasion on the side faces of both the ring-shaped portions of the divided cage opposing each other in the axial direction can be suppressed.

### Advantages of the Invention

With the divided cage according to an aspect of the present invention, the abrasion on the side faces of both the ring-shaped portions thereof opposing each other in the axial direction can be suppressed. Furthermore, with the joint member for the power generation apparatus according to the aspect of the present invention, the one-way clutch thereof is equipped with the above-mentioned divided cage, whereby the abrasion on the side faces of both the ring-shaped portions of the divided cage opposing each other in the axial direction can be suppressed.

### Brief Description of the Drawings

FIG. 1 is a schematic view showing the configuration of a power generation apparatus;
FIG. 2 is a vertical sectional view showing a joint member provided for the power generation apparatus and its periphery;
FIG. 3 is a transverse sectional view showing a one-way clutch;
FIG. 4 is a perspective view showing the cage of the one-way clutch;
FIG. 5 is a perspective view showing the ring-shaped portion of the cage;
FIG. 6 is a perspective view showing the pillar portion of the cage;
FIG. 7 is an explanatory view showing a pillar end portion and its periphery as viewed in the axial direction;
FIG. 8 is a transverse sectional view showing the conventional one-way clutch;
FIG. 9 is a perspective view showing the conventional divided cage; and
FIG. 10 is an explanatory view showing the pillar end portion of the conventional divided cage and its periphery as viewed in the axial direction.

### Mode for Carrying Out the invention

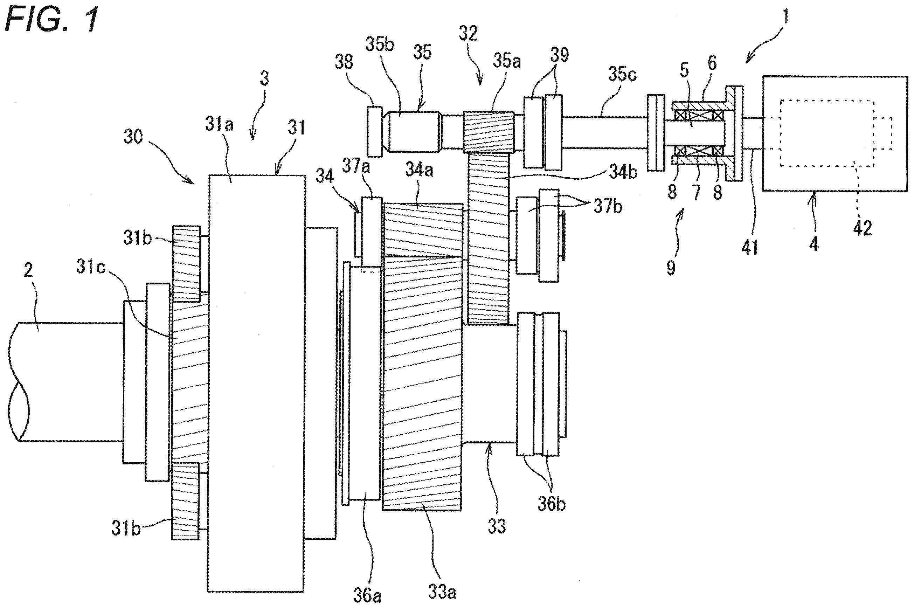

FIG. 1 is a schematic view showing the configuration of a power generation apparatus. This power generation apparatus is a wind power generation apparatus 1 and is equipped with a main spindle 2 that is rotated by receiving wind power (external force), a speed increaser 3 connected to this main spindle 2, and a generator 4 connected to this speed increaser 3, wherein the rotation of the main spindle 2 is increased by the speed increaser 3 and the generator 4 is driven by the increased rotation of the shaft, thereby generating electric power.

The generator 4 is configured, for example, using an induction generator, and has an input shaft 41 to which the rotation increased by the speed increaser 3 is input so that the input shaft 41 is rotated, a rotor 42 incorporated in the generator 4, a stator, not shown, etc. The rotor 42 is connected to the input shaft 41 so as to be rotatable integrally therewith, and the generator 4 is configured so that the input shaft 41 rotates to drive the rotor 42, thereby generating electric power.

The speed increaser 3 is equipped with a gear mechanism (rotation transmission mechanism) 30 to which the rotation of the main spindle 2 is input and in which the rotation is increased. This gear mechanism 30 is equipped with a planetary gear mechanism 31 and a high speed stage gear mechanism 32 to which the rotation increased by the planetary gear mechanism 31 is input and in which the rotation is further increased.

The planetary gear mechanism 31 has an internal gear (ring gear) 31a, a plurality of planetary gears 31 b being held by a planetary carrier (not shown) that is connected to the main spindle 2 so as to be rotatable integrally therewith, and a sun gear 31 c engaged with the planetary gears 31 b. With this configuration, when the planetary carrier is rotated together with the main spindle 2, the sun gear 31 c is rotated via the planetary gears 31 b, and the rotation is transmitted to the low-speed shaft 33 of the high speed stage gear mechanism 32.

The high speed stage gear mechanism 32 is equipped with the low-speed shaft 33 having a low-speed gear 33a, an intermediate shaft 34 having a first intermediate gear 34a and a second intermediate gear 34b, and an output shaft 35 having a high-speed gear 35a.

The low-speed shaft 33 is formed of a large rotation shaft having a diameter of approximately 1 m, for example, and is disposed coaxially with the main spindle 2. Both the end portions of the low-speed shaft 33 in the axial direction are rotatably supported by roller bearings 36a and 36b.

The intermediate shaft 34 is disposed in parallel with the low-speed shaft 33, and both the end portions thereof in the axial direction are rotatably supported by roller bearings 37a and 37b. The first intermediate gear 34a of the intermediate shaft 34 is engaged with the low-speed gear 33a, and the second intermediate gear 34b is engaged with the high-speed gear 35a.

The output shaft 35 is disposed in parallel with the intermediate shaft 34 and outputs rotation torque. The one end portion 35b side and the other end portion (output end portion) 35c side of the output shaft 35 in the axial direction are rotatably supported by roller bearings 38 and 39, respectively.

With the above-mentioned configuration, the rotation of the main spindle 2 is increased in three steps according to the gear ratio of the planetary gear mechanism 31, the gear ratio between the low-speed gear 33a and the first intermediate gear 34a, and the gear ratio between the second intermediate gear 34b and the high-speed gear 35a, and the rotation is output from the output shaft 35. In other words, the rotation of the main spindle 2 by wind power is increased in three steps by the speed increaser 3 and output from the output shaft 35, whereby the generator 4 is driven by the rotation torque of the output shaft 35.

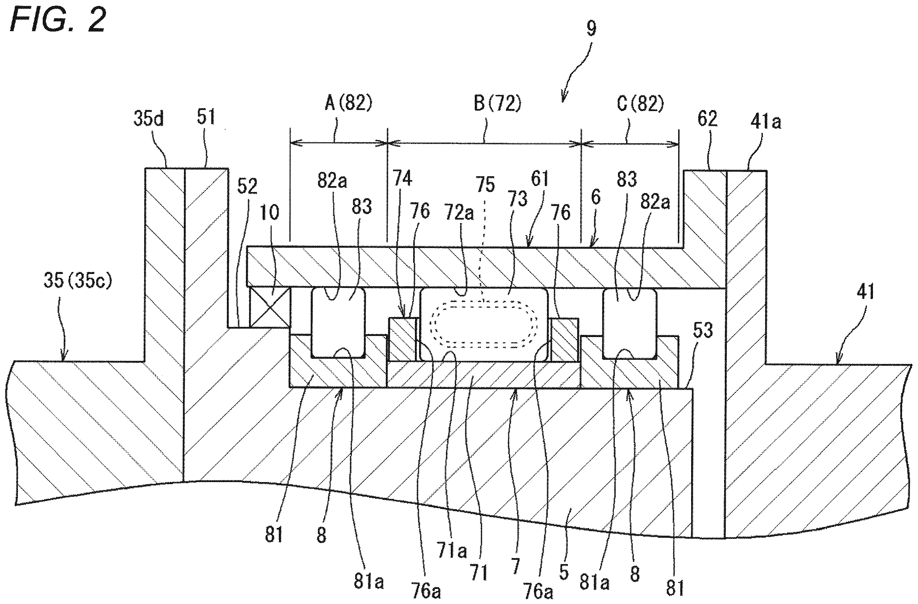

Furthermore, the wind power generation apparatus 1 is equipped with a joint member 9 for connecting the output shaft 35 of the speed increaser 3 to the input shaft 41 of the generator 4. FIG. 2 is a vertical sectional view showing the joint member 9 and its periphery. The joint member 9 is provided in the region between the output shaft 35 and the input shaft 41 so that the torque can be transmitted between the output shaft 35 and the input shaft 41. The joint member 9 has a first rotor 5, a second rotor 6, a one-way clutch 7, and rolling bearings 8. The one-way clutch 7 and the rolling bearings 8 are disposed between the first rotor 5 and the second rotor 6.

The first rotor 5 is a shaft member disposed coaxially with the output shaft 35 and has a flange portion 51, a large-diameter portion 52 and a small-diameter portion 53 in this order in the direction from one end portion (the left end portion in FIG. 2) of the first rotor to the other end portion (the right end portion in FIG. 2) thereof in the axial direction. The flange portion 51 is detachably fixed to the end portion flange 35d of the output shaft 35 and the first rotor 5 rotates integrally with the output shaft 35.

The second rotor 6 is disposed on the outside of the first rotor 5 in the radial direction so as to be coaxial therewith and has a cylindrical portion 61 and a flange portion 62 provided on the other end portion of the cylindrical portion 61 in the axial direction. Although the second rotor 6 is disposed on the outside of the first rotor 5 in the radial direction in the embodiment, the first rotor 5 may be formed into a cylindrical shape, and the first rotor 5 may be disposed on the inside of the first rotor 5 in the radial direction. The flange portion 62 is detachably fixed to the end portion flange 41a of the input shaft 41, and the second rotor 6 rotates integrally with the input shaft 41.

The inner peripheral face of the cylindrical portion 61 is formed into a cylindrical face, and a ring-shaped sealing member 10 is provided between one end portion of the cylindrical portion 61 in the axial direction and the large-diameter portion 52 of the first rotor 5.

The rolling bearings 8 are disposed between the small-diameter portion 53 of the first rotor 5 and the cylindrical portion 61 of the second rotor 6, thereby supporting the first rotor 5 and the second rotor 6 so that the rotors are relatively rotatable to each other. Each rolling bearing 8 is a cylindrical roller bearing and is equipped with an inner ring 81, an outer ring 82 and a plurality of cylindrical rollers 83 rotatably disposed between the inner ring 81 and the outer ring 82. The region A and the region C of both the end portion of the cylindrical portion 61 of the second rotor 6 in the axial direction have functions serving as the outer rings 82 of the rolling bearings 8, and the outer ring raceway faces 82a of the outer rings 82 are formed on the inner peripheral faces of the regions A and C. The cylindrical rollers 83 are rotatably disposed between the outer ring raceway faces 82a and the inner ring raceway faces 81a formed on the outer peripheries of the inner rings 81.

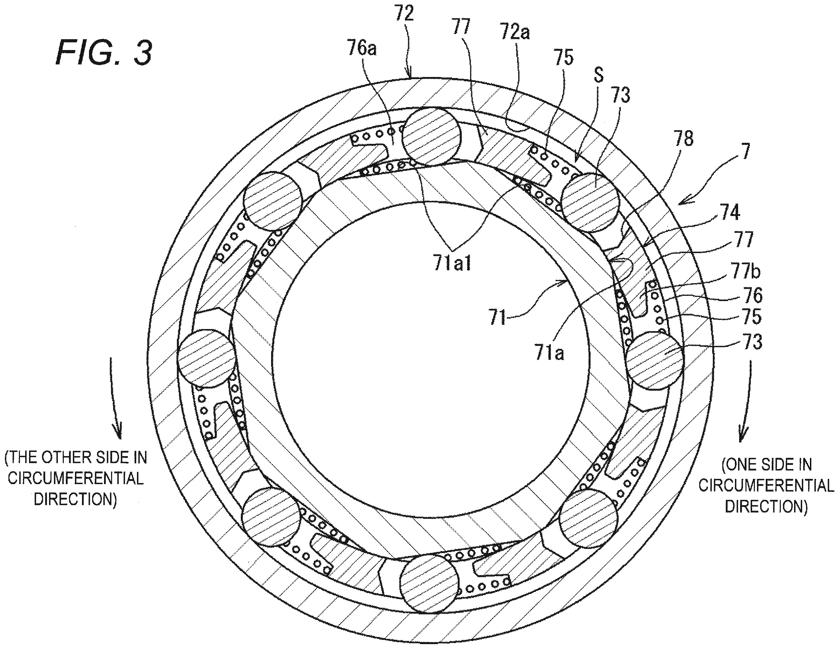

FIG. 3 is a transverse sectional view showing the one-way clutch 7. As shown in FIGS. 2 and 3, the one-way clutch 7 is equipped with an inner ring 71, an outer ring 72 being coaxial with this inner ring 71, a plurality of rollers (engaging elements) 73 provided between the outer peripheral face 71 a of the inner ring 71 and the inner peripheral face 72a of the outer ring 72, a cage 74 in which a plurality of pockets 78 for respectively accommodating the rollers 73 are formed in the circumferential direction, and springs 75 that elastically urge the rollers 73 provided in the respective pockets 78 toward one side in the circumferential direction (clockwise in FIG. 3).

The inner ring 71 is fitted on the axial center portion of the small-diameter portion 53 of the first rotor 5 and fixed thereto so as to rotate integrally with the first rotor 5 (see Fig. 2). The region B at the axial center portion of the cylindrical portion 61 of the second rotor 6 has a function serving as the outer ring 72 of the one-way clutch 7. The rollers 73, being cylindrical in shape and eight in number, are disposed in the circumferential direction in the embodiment. The rollers 73 are made of SUJ2, a kind of bearing steel, in the embodiment. The spring 75 is a compression coil spring and is individually accommodated in each pocket 78 of the cage 74.

Furthermore, although the second rotor 6 is used as the outer ring 72 of the one-way clutch 7 and the outer rings 82 of the rolling bearings 8 in the embodiment, these outer rings 72 and 82 may be separated members from the second rotor 6.

In FIG. 3, cam faces 71 a1, being flat (planar) and as many (eight) as the rollers 73, are formed on the outer peripheral face 71 a of the inner ring 71, and the inner peripheral face 72a of the outer ring 72 is a cylindrical face. Hence, between the cam faces 71a1 and the inner peripheral face 72a, a plurality (eight) of wedge-shaped spaces S are formed in the circumferential direction. Moreover, the roller 73 and the spring 75 are disposed individually in each wedge-shaped space S, and the spring 75 urges the roller 73 in the direction (one side in the circumferential direction) of making the wedge-shaped space S narrower. The outer peripheral face of the roller 73 serves as a contact face which contacts the cam face 71a1 and the inner peripheral face 72a, and the contact face is formed straight in the width direction (the axial direction).

In the one-way clutch 7 configured as described above, in the case that the rotation speed of the first rotor 5 becomes higher than the rotation speed of the second rotor 6 when the rotation of the first rotor 5 is increased, the inner ring 71 tends to rotate relatively with respect to the outer ring 72 in one side direction (the counterclockwise direction in FIG. 3). In this case, the roller 73 is moved slightly in the direction of making the wedge-shaped space S narrower by the urging force of the spring 75, and the contact face (the outer peripheral face) of the roller 73 pressure-contacts the outer peripheral face 71 a (the cam face 71 a1) of the inner ring 71 and the inner peripheral face 72a of the outer ring 72, whereby the roller 73 is engaged between the inner ring 71 and the outer ring 72. Hence, the inner ring 71 and the outer ring 72 can rotate integrally in the one side direction, whereby the first rotor 5 and the second rotor 6 are connected so as to be rotatable integrally. As a result, the output shaft 35 and the input shaft 41 can be rotated integrally.

Furthermore, in the case that after the rotation speed of the first rotor 5 is increased and then becomes constant, the rotation speed of the first rotor 5 becomes constant and equal to the rotation speed of the second rotor 6, the rollers 73 are held in a state of being engaged between the inner ring 71 and the outer ring 72. Hence, the one-way clutch 7 is maintained in a state in which the inner ring 71 and the outer ring 72 rotate integrally in the one side direction, and the first rotor 5 and the second rotor 6 (the output shaft 35 and the input shaft 41) continue to rotate integrally.

On the other hand, in the case that the rotation of the first rotor 5 is decreased and the rotation speed of the first rotor 5 becomes lower than the rotation speed of the second rotor 6, the inner ring 71 tends to rotate relatively with respect to the outer ring 72 in the other side direction (the clockwise direction in FIG. 3). In this case, the roller 73 is moved slightly in the direction of making the wedge-shaped space S wider against the urging force of the spring 75, whereby the engagement between the roller 73 and the inner and outer rings 71 and 72 is released. Since the engagement of the roller 73 is released in this way, the inner and outer rings 71 and 72 are allowed to rotate relatively in the other side direction, and the connection between the first rotor 5 and the second rotor 6 is cut off. As a result, the output shaft 35 and the input shaft 41 can rotate relatively to each other (rotate idly).

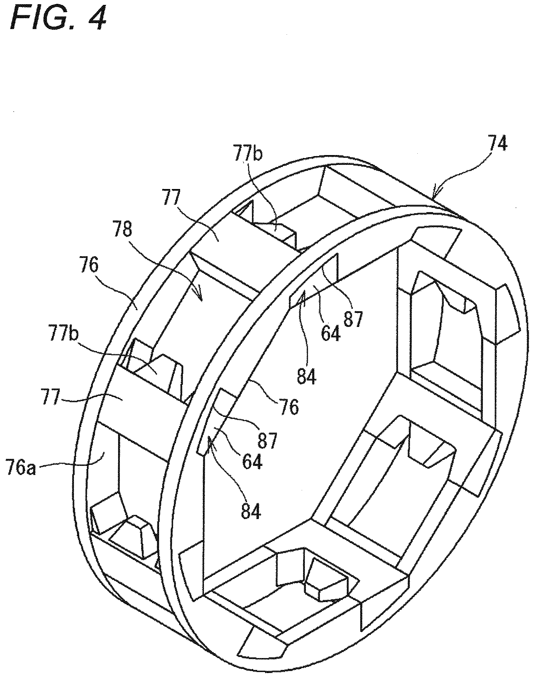

FIG. 4 is a perspective view showing the cage 74 of the one-way clutch 7. The cage 74 is a divided cage and has a pair of ring-shaped portions 76 opposing each other in the axial direction and a plurality of pillar portions 77 which are separated members from the ring-shaped portions 76. Both the end portions of the axial direction (pillar end portions 64) of each pillar portion 77 are fitted in recess portions 84 described later and provided in the two ring-shaped portions 76, whereby the pillar portions 77 connect the pair of ring-shaped portions 76. The pocket 78 is formed between the two ring-shaped portions 76 and between the pillar portions 77 adjacent to each other in the circumferential direction, and the roller 73 is accommodated in each pocket 78 (see FIG. 3). Hence, the cage 74 can hold the plurality of rollers 73 at intervals in the circumferential direction.

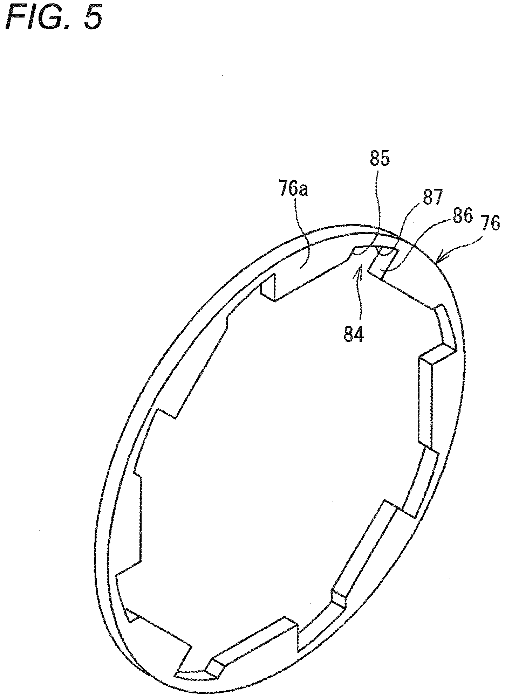

FIG. 5 is a perspective view showing the ring-shaped portion 76 of the cage 74. The ring-shaped portion 76 is made of a metal, such as carbon steel or aluminum, and is a ring-shaped member having an outside diameter of 300 mm and a thickness of 15 mm in the axial direction, for example. In the embodiment, the ring-shaped portion 76 is made of a cold-rolled steel plate (SPCC). Furthermore, the pair of ring-shaped portions 76 is provided between the inner ring 71 and the outer ring 72 of the one-way clutch 7 (see FIG. 3) so as to be oppose each other in the axial direction.

In FIG. 5, the plurality of recess portions 84 are formed at intervals in the circumferential direction on the inner peripheral side of each ring-shaped portion 76. Each recess portion 84 has a first side face 85 and a second side face 86 provided on both sides in the circumferential direction and also has a wedge face 87 provided between these side faces 85 and 86 and facing inward in the radial direction.

With the above-mentioned configuration, it is conceived that the roller 73 may slide with respect to the inside faces 76a (the side faces on the side of the pocket 78) of both the ring-shaped portions 76 opposing each other in the axial direction due to skew or the like, and this slide may cause abrasion on the inside faces 76a and may result in breakage of the cage 74.

Hence, in the embodiment, the inside faces 76a are subjected to surface treatment for abrasion resistance (abrasion suppression), and the hardness of the inside faces 76a is set to 400 HV or more, preferably 500 HV or more, and the friction coefficient of the inside faces 76a is set to 0.24 or less. In the case that the friction coefficient is set to 0.24 or less as described above, the roller 73 is allowed to easily slide with respect to the inside faces 76a, and the power transmission loss of the one-way clutch 7 can be reduced. Moreover, in the case that the roller 73 is allowed to easily slide with respect to the inside faces 76a as described above and that the hardness of the inside faces 76a is raised as described above, the abrasion of the inside faces 76a can be suppressed. Since the inside faces 76a are subjected to the abrasion resistance treatment as described above, the hardness of the inside faces 76a is made higher than the surface hardness of the pillar portion 77 (not subjected to abrasion resistance treatment).

As the abrasion resistance treatment for fulfilling the requirements for the above-mentioned hardness and friction coefficient, soft nitriding treatment (NV nitriding treatment) is used, for example. By the soft nitriding treatment, dense nitrated layers (outside nitrated layer, compound layer and white layer) formed of composite nitride layers of iron, chromium, etc. and a layer in which nitrogen is simply solid-dissolved or a diffusion layer (inside nitrated layer) formed of a composite layer in which the nitrides of additive elements are dispersed and deposited in a parent phase in which nitrogen is solid-dissolved are formed in the above-mentioned order from the surface having been subjected to the treatment to the inside.

By the soft nitriding treatment, not only the hardness of the inside faces 76a of both the ring-shaped portions 76 can be made higher, but also the friction coefficient of the inside faces 76a can be made smaller. Furthermore, since the soft nitriding treatment is performed at a treatment temperature of not higher than the A₁ transformation point, the dimensional change and distortion of the ring-shaped portions 76 due to the soft nitriding treatment are small. Hence, the ring-shaped portions 76 can be connected to the pillar portions 77 easily and the divided cage 74 can be assembled easily without performing secondary processing for the ring-shaped portions 76 after the soft nitriding treatment.

In the soft nitriding treatment, the hardness of the portions near the surface subjected to the treatment can be made higher, but the depth (hardened depth) in which hardening can be performed is shallow. However, unlike the cases of the inner ring 71 and the outer ring 72, a large shearing force and a large contact surface pressure are not exerted to the inside faces 76a of the ring-shaped portions 76, whereby no problem occurs even if the inside faces 76a are subjected to the soft nitriding treatment.

The above-mentioned abrasion resistance treatment includes all kinds of treatment for suppressing the abrasion of the inside faces 76a. As another example of the abrasion suppression treatment, a DLC film (diamond-like carbon film) serving as a high-hardness low-friction film, for example, may be formed on the inside faces 76a. Furthermore, the film to be formed is not limited to the DLC film but may be other types of films, provided that the films have abrasion resistance.

Furthermore, as described above (see FIG. 4), the cage 74 is a divided cage and has the pair of ring-shaped portions 76 and the plurality of pillar portions 77 which are separated members from the ring-shaped portions 76. Moreover, the pillar end portions 64 of each pillar portion 77 are fitted in the recess portions 84 provided in the ring-shaped portions 76, whereby the cage 74 is assembled. Hence, it is preferable that the above-mentioned abrasion resistance treatment for the inside faces 76a of the ring-shaped portions 76 should be performed before the pillar end portions 64 are fitted into the recess portions 84. In other words, it is preferable that the abrasion resistance treatment, such as the soft nitriding treatment, should be performed for the ring-shaped portions 76 which are separated members from the pillar portions 77 and that, after the treatment, the ring-shaped portions 76 should be integrated with the pillar portions 77 to complete the cage 74. This is because, in the case of the wind power generation apparatus 1 according to the embodiment, the respective components thereof are large and heavy and are difficult to handle. In other words, in the case that, after the ring-shaped portions 76 have been temporarily integrated with the pillar portions 77, some parts of the ring-shaped portions 76 are subjected to the abrasion resistance treatment, since the cage 74 is large and heavy, the workability for the abrasion resistance treatment is low and the time for the treatment may become long. However, the workability is improved in the case that the abrasion resistance treatment is performed before the pillar end portions 64 are fitted in the recess portions 84 and the pair of ring-shaped portions 76 are integrated with the plurality of pillar portions 77 as described above.

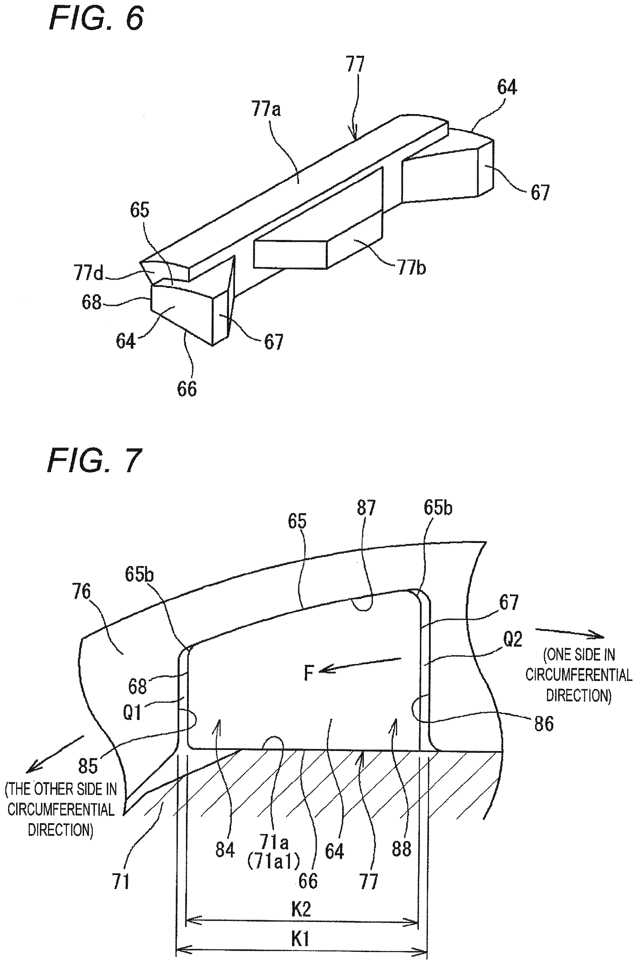

FIG. 6 is a perspective view showing the pillar portion 77 of the cage 74. The pillar portion 77 is made by injection molding a synthetic resin material. The pillar portion 77 has a body portion 77a, a protruding portion 77b provided so as to protrude from one end face of the body portion 77a in the circumferential direction, and the pair of pillar end portions 64 provided on both the sides of the body portion 77a in the axial direction. As shown in FIG. 3, the protruding portion 77b is used to support the spring 75 at a predetermined position inside the pocket 78, and the spring 75 having a coil shape is fitted on the protruding portion 77b.

In FIG. 6, the pillar end portions 64 are formed so as to be thinner than the body portion 77a in the radial direction (the up-down direction in the figure), and a stepped face 77d is formed between the outer peripheral face of the pillar end portion 64 and the outer peripheral face of the body portion 77a. The divided cage 74 is assembled (see FIG. 4) by fitting the pillar end portions 64 into the recess portions 84 (see FIG. 5) provided in the ring-shaped portions 76.

In the one-way clutch 7 configured as described above, since the ring-shaped portions 76 and the pillar portions 77 constituting the cage 74 are provided as separated members, the ring-shaped portions 76 and the pillar portions 77 can be manufactured individually. Hence, the cage can be manufactured more easily than a cage that is wholly manufactured integrally.

As described above, in each pocket 78 (see FIG. 3), the spring 75 is positioned between the pillar portion 77 and the roller 73, and the spring 75 urges the roller 73 toward one side in the circumferential direction. Hence, the reaction force of the spring 75 urging the roller 73 is exerted to the pillar portion 77. The reaction force is exerted toward the other side in the circumferential direction.

FIG. 7 is an explanatory view showing the pillar end portion 64 of the pillar portion 77 and its periphery as viewed in the axial direction. The arrow F shown in FIG. 7 indicates the above-mentioned reaction force. The reaction force F of the spring 75 is exerted to the ring-shaped portions 76 via the pillar end portions 64.

As shown in FIG. 7, the recess portion 84 formed in the ring-shaped portion 76 has a wedge face 87 facing inward in the radial direction, and in the recess portion 84, a wedge-shaped space 88 extending toward the other side in the circumferential direction and narrowing in the radial direction is formed by the wedge face 87 between the wedge face 87 and the outer peripheral face 71 a of the inner ring 71. As described above, the recess portion 84 has the first side face 85 and the second side face 86 that are positioned on both sides of the wedge face 87 in the circumferential direction, whereby the recess portion 84 has a cut-out shape being open inward in the radial direction by virtue of these faces.

On the other hand, the pillar end portion 64 fitted in the recess portion 84 has a wedge shape corresponding to the wedge-shaped space 88. In other words, the pillar end portion 64 has a wedge shape in which the radial dimension thereof becomes smaller gradually toward the other side in the circumferential direction so as to corresponding to the wedge-shaped space 88 (see FIGS. 6 and 7). The pillar end portion 64 according to the embodiment has a nearly trapezoidal shape (having arcuate portions 65b at the corners) as viewed from the direction being parallel with the axial direction of the cage 74 and has a radial outside face 65 which contacts the wedge face 87, a radial inside face 66 which contacts the cam face 71 a1 of the outer peripheral face 71 a of the inner ring 71, a first peripheral side face 67 on one side in the circumferential direction, and a second peripheral side face 68 on the other side in the circumferential direction. The side faces 67 and 68 are faces respectively extending in the radial direction, and the two faces are nearly parallel with each other; however, the radial outside face 65 is entirely formed into an inclined face that becomes closer to the radial inside face 66 toward the other side in the circumferential direction.

In the case of the conventional divided cage 90 shown in FIG. 9, however, the ring-shaped portions 91 and the pillar portion 92 are separated members and can be manufactured individually, whereby the cage 90 can be manufactured easily. In addition, although the pillar portion 92 has a protruding portion 96 for supporting a spring, not shown, the pillar portion 92 including the protruding portion 96 can be manufactured easily by performing injection molding, for example.

Although the cage 90 can be manufactured easily by making the cage 90 into a divided type as described above, the shape of both end portions (pillar end portions 93) of the pillar portion 92 and the shape of the recess portions 94 of the ring-shaped portions 91 in which the pillar end portions 93 are fitted become complicated (see FIG. 10). FIG. 10 is an explanatory view showing the pillar end portion 93 of the divided cage 90 and its periphery as viewed in the axial direction.

The shape of the pillar end portion 93 becomes complicated because the spring 105 urges the roller 103 toward one side in the circumferential direction and the reaction force F toward the other side in the circumferential direction is exerted to the pillar portion 92, whereby a configuration (for transmitting the reaction force to the ring-shaped portions 91) wherein the ring-shaped portions 91 support the reaction force F via the pillar end portions 93 is required. In other words, in order that the ring-shaped portions 91 support the reaction force F, it is necessary to form a load receiving face 95 nearly orthogonal to the circumferential direction on the other side of the pillar end portion 93 in the circumferential direction and to allow the load receiving face 95 to contact the side face 94a of the recess portion 94. In addition, the area of the load receiving face 95 is made large to lower the contact surface pressure between the load receiving face 95 and the side face 94a.

In order that the load receiving face 95 having the large area is provided on the other side of the pillar end portion 93 in the circumferential direction as described above, the radial dimension of the pillar end portion 93 is required to be made large; as a result, the contour shape (sectional shape) of the pillar end portion 93 has many recesses and protrusions and is complicated as shown in FIG. 10. Furthermore, in order to allow the load receiving face 95 to accurately contact the side face 94a, these two faces (95 and 94a) are required to have the same shape, whereby high precision dimensional control is required when the respective portions are manufactured. Hence, the pillar end portion 93 and the recess portion 94 into which the pillar end portion 93 is fitted have many recesses and protrusions and are complicated in shape, and what's more, fine dimensional control is also required for the manufacturing.

On the other hand, in the embodiment, the pillar end portion 64 having a wedge shape is fitted in the wedge-shaped space 88, the radial outside face 65 of the pillar end portion 64 contacts the wedge face 87 of the recess portion 84, and the radial inside face 66 of the pillar end portion 64 contacts the cam face 71a1 of the outer peripheral face 71 a of the inner ring 71. Hence, as described above, the reaction force (the reaction force toward the other side in the circumferential direction) F of the spring 75 is exerted to the pillar portion 77, and the reaction force F is transmitted from the radial outside face 65 and the radial inside face 66 of the pillar end portion 64 to the ring-shaped portions 76 and the inner ring 71, respectively, since the pillar end portions 64 having the wedge shape are fitted into the wedge-shaped spaces 88. Furthermore, the pillar portion 77 is positioned in the circumferential direction by the radial outside face 65 and the radial inside face 66 which contact the wedge face 87 and the cam face 71 a1.

Consequently, the divided cage 74 according to the embodiment does not require the load receiving face 95 that is provided on the other side of the pillar end portion 93 in the circumferential direction in the conventional cage (see FIG. 10). The load receiving face 95 is a face being nearly orthogonal to the circumferential direction and contacting the side face 94a of the recess portion 94 and is also a face for receiving the reaction force F of the spring 105.

Since the load receiving face 95 is not necessary as described above, the shape of the pillar end portion 64 is simplified and the shape of the recess portion 84 of the ring-shaped portion 76 in which the pillar end portion 64 is fitted is also simplified, whereby the divided cage 74 composed of components having simplified configurations is obtained.

Furthermore, in the embodiment, the radial outside face 65 of the pillar end portion 64 is a flat face, although the face may be an arcuate face having a large radius and protruding outside in the radial direction, and the wedge face 87 which the radial outside face 65 contacts is a flat face, although the face may be an arcuate face having a large radius and protruding outside in the radial direction. Moreover, the cam face 71 a1 of the inner ring 71 is a flat face, and the radial inside face 66 which contacts the cam face 71 a1 is a flat face entirely. What's more, the first peripheral side face 67 and the second peripheral side face 68 of the pillar end portion 64 are flat faces, and the first side face 85 and the second side face 86 of the recess portion 84 are also flat faces.

Hence, the pillar end portion 64 according to the embodiment has a nearly trapezoidal shape as viewed in a direction in parallel with the axial direction of the cage 74; in particular, the shape of the radial outside face 65 of the pillar end portion 64, the shape of the wedge face 87 of the recess portion 84 and the shape of the radial inside face 66 of the pillar end portion 64 are simplified in comparison with the conventional cage, whereby the pillar portion 77 and the ring-shaped portion 76 can be manufactured easily.

In the embodiment, since the arcuate portions 65b protruding outside in the radial direction are disposed between the radial outside face 65 and the side faces 67 and 68, the pillar end portion 64 has a nearly trapezoidal shape in which the arcuate portions 65b are provided at the corners as viewed in a direction in parallel with the axial direction of the cage 74.

Furthermore, in the embodiment, the circumferential dimension K1 of the recess portion 84 is set so as to be larger than the circumferential dimension K2 of the pillar end portion 64 (K1>K2). Hence, circumferential clearances Q1 and Q2 are formed between the recess portion 84 and the pillar end portion 64. In particular, the dimensions of the recess portion 84 and the pillar end portion 64 are set so that the clearance Q1 formed on the other side in the circumferential direction remains even in the case that the pillar end portion 64 is pushed by the reaction force F toward the other side in the circumferential direction and is moved inside the recess portion 84 (the wedge-shaped space 88). Consequently, when the reaction force F is exerted, the radial outside face 65 of the pillar end portion 64 can securely surface-contact (pressure-contact) the wedge face 87 of the recess portion 84, and the radial inside face 66 of the pillar end portion 64 can securely surface-contact (pressure-contact) the cam face 71a1 of the outer peripheral face 71 a of the inner ring 71.

Moreover, since the clearances Q1 and Q2 are formed in the circumferential direction between the recess portion 84 and the pillar end portion 64, the pillar end portion 64 is easily fitted into the recess portion 84 of the ring-shaped portion 76 when the ring-shaped portions 76 and the pillar portions 77 are assembled. What's more, the pillar end portion 64 may merely be formed into the above-mentioned wedge shape, and fine dimensional control is not required when the pillar end portion 64 and the recess portion 84 are formed, whereby the pillar portions 77 and the ring-shaped portions 76 can be manufactured easily.

As described above, since the one-way clutch 7 shown in FIG. 2 is equipped with the divided cage 74 in which the configurations of the pillar portions 77 and the ring-shaped portions 76 are simplified, the cost of the one-way clutch 7 can be reduced, and since the joint member 9 shown in FIG. 2 has the one-way clutch 7 equipped with the divided cage 74, the cost of the joint member 9 can also be reduced.

In the embodiment, the case in which one ring-shaped portion 76 is formed of a single ring-shaped member has been described; however, one ring-shaped portion 76 may be configured by laminating a plurality of ring-shaped members in the axial direction (not shown). In this case, a protruding portion is formed on a single ring-shaped member, and a recess portion is formed in another ring-shaped member to be laminated thereon, whereby a plurality of ring-shaped members are mutually fixed and one ring-shaped portion 76 is formed.

Furthermore, in the embodiment (see FIG. 6), the case in which the contour of the pillar end portion 64 is formed so as to have four faces (65, 66, 67 and 68) and the shape (side view shape, sectional shape) of the pillar end portion 64 is nearly trapezoidal has been described; however, the pillar end portion 64 may merely be formed into a wedge shape having the radial outside face 65 and the radial inside face 66; for example, the peripheral side face (68) on the other side in the circumferential direction may be omitted (or may be made extremely narrower than the other face), whereby the shape of the pillar end portion 64 may be formed into a nearly triangular shape, although this shape is not shown.

Moreover, the present invention can be carried out by making appropriate modifications without being limited by the above-mentioned embodiment. For example, although a roller is used as the engaging element 73 in the embodiment, a sprag may also be used as the engaging element 73. What's more, in the one-way clutch 7 according to the embodiment, although the ring-shaped portion 76 of the cage 74 is made of a metal, the ring-shaped portion 76 may be formed of a synthetic resin. In this case, the ring-shaped portion 76 can be manufactured easily by subjecting a synthetic resin material to injection molding.

Besides, although the joint member 9 for the power generation apparatus according to the embodiment is shown as an example of the joint member for the wind power generation apparatus 1 in which wind power is used as external power, the joint member is also applicable to power generation apparatuses for generating electric power by using other external forces, such as hydraulic power and thermal power. Still further, the one-way clutch according to the present invention is applicable to apparatuses other than power generation apparatuses.

The present application is based on Japanese Patent Application (patent application 2014-010278) filed on January 23, 2014, and the contents thereof are herein incorporated by reference.

### Description of Reference Signs

1: Wind Power Generation Apparatus (Power Generation Apparatus) 2: Main Spindle 3: Speed Increaser 4: Generator 5: First Rotor 6: Second Rotor 7: One-Way Clutch 9: Joint Member 30: Gear Mechanism (Rotation Transmission Mechanism) 35: Output Shaft 41: Input Shaft 42: Rotor 64: Pillar End Portion 65: Radial Outside Face 66: Radial Inside Face 71: Inner Ring 71 a: Outer Peripheral Face 71a1: Cam Face 72: Outer Ring 73: Roller (Engaging Element) 74: Cage (Divided Cage) 75: Spring 76: Ring-Shaped Portion 76a: Inside Face 77: Pillar Portion 78: Pocket 84: Recess Portion 87: Wedge Face 88: Wedge-Shaped Space F: Reaction Force

## Claims

1. A divided cage in which a plurality of pockets for accommodating engaging elements between an inner ring and an outer ring of a one-way clutch are formed in a circumferential direction, said divided cage comprising:
a pair of ring-shaped portions which oppose each other in an axial direction and which are provided between the inner ring and the outer ring; and
a plurality of pillar portions which are separated members from the pair of ring-shaped portions and which comprise end portions in the axial direction connected to the ring-shaped portions,
wherein side faces of both the ring-shaped portions opposing each other in the axial direction are subjected to abrasion resistance treatment.

2. The divided cage according to claim 1,
wherein the ring-shaped portions are made of metal, and
wherein the abrasion resistance treatment is soft nitriding treatment.

3. The divided cage according to claim 1 or 2,
wherein a spring provided in each of the pockets urges the engaging element toward one side in the circumferential direction, whereby reaction force toward the other side in the circumferential direction is exerted to the pillar portion,
wherein a plurality of recess portions are formed at intervals in the circumferential direction on an inner peripheral side of each of the ring-shaped portions,
wherein each of the recess portions comprises a wedge face which forms a wedge-shaped space that becomes radially narrower toward the other side in the circumferential direction between the wedge face and an outer peripheral face of the inner ring,
wherein the pillar portion comprises pillar end portions on both sides thereof in the axial direction so as to be fitted in the recess portions, and
wherein the pillar end portion has a wedge shape in which a radial dimension thereof toward the other side in the circumferential direction becomes smaller, and comprises a radial outside face which contacts the wedge face, and a radial inside face which contacts the outer peripheral face of the inner ring.

4. A joint member for a power generation apparatus, the power generation apparatus comprising:
a main spindle that is rotated by an external force;
a speed increaser comprising a rotation transmission mechanism which increases rotation of the main spindle, and an output shaft which outputs the rotation increased by the rotation transmission mechanism; and
a generator which comprises an input shaft that is rotated when the rotation of the output shaft is input and which generates electric power by the rotation of a rotor that rotates integrally with the input shaft,
said joint member comprising:
a first rotor integrally rotating with the output shaft of the speed increaser;
a second rotor integrally rotating with the input shaft of the generator; and
a one-way clutch disposed between the first rotor and the second rotor,
wherein the one-way clutch comprises:
an inner ring;
an outer ring concentric with the inner ring;
a plurality of engaging elements provided between the inner ring and the outer ring;
the divided cage according to any one of claims 1 to 3, to be used for the engaging elements; and
springs provided in the pockets of the divided cage to urge the engaging elements toward one side in the circumferential direction.
